# EUROPÄISCHE PATENTSCHRIFT

(11) **EP 0 355 787 B1**
(45) Veröffentlichungstag und Bekanntmachung des Hinweises auf die Patenterteilung: **05.10.1994**
(21) Anmeldenummer: 89115456.9
(22) Anmeldetag: 22.08.1989
(51) Int. Cl.: F02M 37/22, F02M 31/12

(54) **Kraftstoffilter mit Heizelement und integrierter Leistungselektronik**
Fuel filter with a heating element and integrated electronic control device
Filtre à carburant avec élément de chauffage et dispositif de commande électronique intégré

(30) Priorität: 23.08.1988 DE 3828525
(43) Veröffentlichungstag der Anmeldung: 28.02.1990
(73) Patentinhaber: Bayerische Motoren Werke Aktiengesellschaft, 80788 München (DE)
(72) Erfinder: Knoll, Karl Michael, A-4400 Steyr (AT); Käsmeier, Klaus, A-4441 Behamberg (AT)

(56) Entgegenhaltungen:
- FR-A- 2 483 013
- FR-A- 2 594 708
- GB-A- 2 076 056
- US-A- 4 091 265
- US-A- 4 479 477

## Beschreibung

Die Erfindung bezieht sich auf einen Kraftstoffilter, insbesondere für Diesel-Verbrennungskraftmaschinen, nach dem Oberbegriff des Patentanspruchs 1.

In diesem Zusammenhang ist aus der GB 2 076 056 A eine Kraftstoff-Heizvorrichtung bekannt, die bis auf das Merkmal der Anordnung im Filterkopf die Merkmale des Oberbegriffs des Patentanspruchs 1 aufweist. Über die Anordnung der Heizvorrichtung findet sich in dieser Druckschrift keine Angabe. Mit Hilfe der Batteriespannungsüberwachung soll eine unerwünscht hohe Stromaufnahme der Heizung verhindert werden. Ferner dient diese Überwachung zum Schutz der Heizvorrichtung selbst. Dies ist erforderlich, da der Kraftstoff lediglich indirekt beheizt wird. Das Heizelement kommt nicht direkt in Kontakt mit dem Kraftstoff, sondern führt lediglich seine Wärme an den Kraftstoff ab.

Der Erfindung liegt die Aufgabe zugrunde, eine Heizvorrichtung, insbesondere für Diesel-Brennkraftmaschinen mit Kraftstoffilter zu schaffen, die sich durch einen gedrängten Aufbau bei guter Leistungsausbeute und optimaler Betriebsdauer auszeichnet.

Die Erfindung löst diese Aufgabe durch die kennzeichnenden Merkmale des Patentanspruchs 1 mit der zusätzlichen Maßgabe, daß die Heizvorrichtung im Filterkopf des Kraftstoffilters eingebaut ist.

Mit der Batteriespannungsüberwachung wird der Anlaßvorgang erkannt und während dieses Zeitraums ein Ausschalten der Heizung veranlaßt. Ein Großteil der Verbindungsleitungen befinden sich innerhalb des Filterkopfs und besitzen eine Lange von nur noch wenigen Zentimetern. Daraus ergibt sich eine Montageersparnis, ein kleineres Gewicht und kleinere Kosten.

Weitere Vorteile und Ausgestaltungen der Erfindung ergeben sich aus der Beschreibung eines Ausführungsbeispiels anhand der Figuren. Es zeigen:
- Fig. 1: eine Schaltungsanordnung zum Heizen von Kraftstoff nach dem Stand der Technik und
- Fig. 2: einen Filterkopf eines Kraftstoffilters mit integriertem Logik- und Leistungsbaustein gemäß der Erfindung

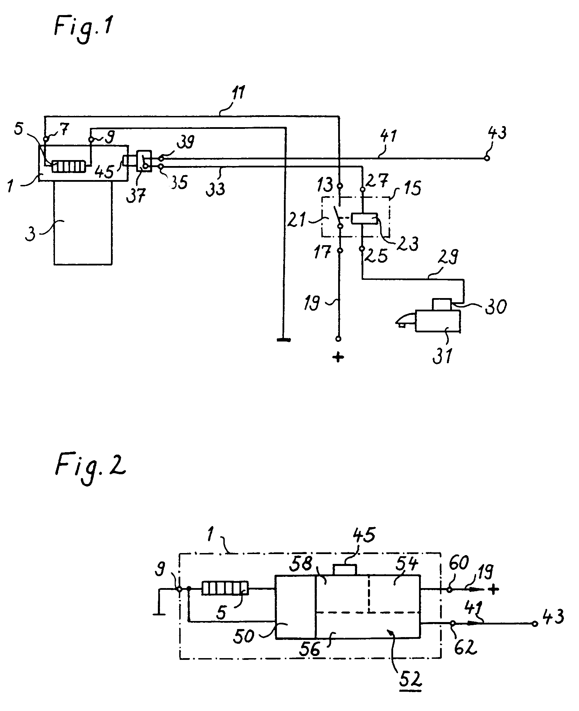

In Fig. 1 ist ein schematisches Schaltbild einer Heizung mit Heizungssteuerung für den Dieselkraftstoff eines Kraftfahrzeugs dargestellt. Ein Filterkopf 1 ist auf einem Kraftstoffilter 3 befestigt und enthält ein Heizelement 5. Das Heizelement 5 weist zwei Anschlüsse 7 und 9 auf, von denen der Anschluß 7 über eine erste Verbindungsleitung 11 mit der ersten Ausgangsklemme 13 eines Schaltrelais 15 verbunden ist. Die zweite Ausgangsklemme 17 des Schaltrelais 15 ist über eine zweite Verbindungsleitung 19 mit dem Pluspol der Batterie verbunden. Das Schaltrelais 15 umfaßt einen Schalter 21, mit welchem die beiden Ausgangsklemmen 13, 17 miteinander verbunden oder geöffnet werden können. Das Schaltrelais 15 weist außerdem eine Betätigungsspule 23 auf, mit deren Hilfe der Schalter 21 gesteuert werden kann. Die Ausschlüsse der Betätigungsspule 23 sind zu einer ersten und zweiten Eingangsklemme 25 bzw. 27 am Schaltrelais 15 geführt. Die erste Eingangsklemme 25 ist über eine dritte Verbindungsleitung 29 mit einer Klemme 30 an dem Starter 31 des Kraftfahrzeugs verbunden. Die zweite Eingangsklemme 27 des Schaltrelais 15 ist über eine vierte Verbindungsleitung 33 mit einer ersten Klemme 35 eines Temperaturschalters 37 verbunden. Der Temperaturschalter 37 weist eine zweite Klemme 39 auf, von der eine fünfte Verbindungsleitung 41 zu einer weiteren Klemme 43 führt, die bei eingeschalteter Zündung auf Potential gelegt ist und bei ausgeschalteter Zündung kein Potential aufweist. Der Temperaturschalter 37 ist in den Filterkopf 1 eingeschraubt und weist einen Meßfühler 45 auf, über welchen die Temperatur des Kraftstoffs gemessen werden kann.

Die Funktion der Schaltung sieht vor, daß das Heizelement 5 eingeschaltet ist, wenn an der anderen Klemme 43, also bei eingeschalteter Zündung, die Batteriespannung anliegt, die Kraftstofftemperatur unter einem vorgegebenen Wert von beispielsweise + 5°C liegt, woraufhin der Temperaturschalter 37 geschlossen ist und die beiden Klemmen 35, 39 miteinander verbindet, und der Starter 31 nicht betätigt wird. Im Schaltrelais 15 sind dann die beiden Ausgangsklemmen 13, 17 miteinander verbunden. Ist eine dieser drei Bedingungen nicht erfüllt, so fällt das Schaltrelais 15 ab und öffnet den Schalter 21, woraufhin der Heizstromkreis unterbrochen wird.

Diese Schaltungsanordnung weist eine Vielzahl an Verbindungsleitungen 11, 19, 29, 33 und 41 auf, die zum Teil erhebliche Längen haben, um die weit voneinander entfernt liegenden Bauelemente Filterkopf 1, Temperaturschalter 37, Schaltrelais 15, weitere Klemme 43 und Starter 31 miteinander zu verbinden.

Auch die Anzahl der benötigten Klemmen 7, 9, 13, 17, 25, 27, 30, 35, 39 und 43 ist erheblich. Aufgrund dieser Umstände ist diese Ausführungsform aufwendig zu montieren und verursacht hohe Kosten durch lange Leitungslängen, große Leitungsquerschnitte viele Verbindungsstellen.

In Fig. 2 ist die verbesserte Ausführungsform gemäß der Erfindung dargestellt, wobei gleiche Bauteile mit den gleichen Bezugszeichen versehen sind wie in Fig. 1. Die Fig. 2 zeigt einen Filterkopf 1, in welchem ein Heizelement 5 angeordnet ist. Eine Seite des Heizelementes 5 ist über einen Anschluß 9 an Masse gelegt, während die andere Seite des Heizelementes 5 an einen elektronischen Leistungsschalter 50 angeschlossen ist. Der elektronische Leistungsschalter 50 ist Teil eines Logik- und Leistungsbausteins 52, der ebenfalls innerhalb des Filterkopfs 1 angeordnet ist. Der Logik- und Leistungsbaustein 52 enthält außerdem eine Batteriespannungsüberwachungsschaltung 54, eine Ansteuerlogik und Schutzbeschaltung 56 und eine integrierte Kraftstofftemperaturerfassungsschaltung 58. An die Kraftstofftemperaturerfassungsschaltung ist ein Temperaturfühler 45 angeschlossen. Der Logik- und Leistungsbaustein 52 weist zwei Eingangsklemmen 60 und 62 auf. Die erste Eingangsklemme ist über eine Verbindungsleitung 19 mit der Batterie verbunden und die zweite Eingangsklemme 62 über eine Verbindungsleitung 41 mit einer weiteren Klemme 43, die bei eingeschalteter Zündung auf Batteriepotential gelegt ist und bei ausgeschalteter Zündung kein Potential aufweist. Er ist ferner direkt mit Massepotential (Anschluß 9) verbunden.

Über den Anschluß an der Eingangsklemme 60 ist der Logik- und Leistungsbaustein 52 permanent mit der Batteriespannung von 12 Volt verbunden. Durch Anlegen von 12 Volt an die zweite Eingangsklemme 62 durch Einschalten der Zündung erkennt der Logik- und Leistungsbaustein 52 den grundsätzlichen Wunsch für ein Heizen des Kraftstoffs, der nur bei Betrieb des Kraftfahrzeugs gegeben ist. Für den Fall, daß der Temperaturfühler 45 eine Kraftstofftemperatur unterhalb der vorgebbaren Temperatur von beispielsweise 5°C erkennt, schaltet der Logik- und Leistungsbaustein 52 die Leistungstransistoren 50 durch, woraufhin das Heizelement 5 aus der Batterie gespeist wird. Übersteigt die Kraftstofftemperatur den vorgegebenen Wert, wird das Heizelement 5 abgeschaltet.

Je nach Ausführung des Logikteils des Logik- und Leistungsbausteins 52 kann anstatt dieser einfachen Ein-Ausschaltung auch ein komplizierterer Regelalgorithmus mit mehreren Leistungsstufen für die Heizleistung vorgesehen werden. Die integrierte Batteriespannungsüberwachungsschaltung 54 erkennt eine hohe Batteriebelastung, wie sie bei Starter-Betätigung auftritt, und schaltet für diesen Zeitraum das Heizelement 5 ab. Während des Betriebs des Logik- und Leistungsbausteins 52 überwacht die Ansteuerlogik und Schutzbeschaltung 56 die Funktionsweise und schaltet bei nichtbetriebskonformen Zuständen das Heizelement 5 ab. Dieses kann z.B. geschehen, wenn die Temperatur der Leistungsschalter 50 einen vorgebbaren Grenzwert überschreitet, ein Überstrom auftritt oder ein Meßwert des Temperaturfühlers 45 als nicht realistisch erkannt wird. Zur Realisierung des Logik- und Leistungsbausteins 52 wird vorzugsweise eine Hybridschaltung oder eine integrierte Schaltung verwendet.

Die anhand der Fig. 2 beschriebene Ausführungsform bietet die Vorteile einer kompakten Bauweise, einer kostengünstigen Montage auch bei nachträglichem Einbau, einer Reduzierung der Verbindungsleitungen, des Wegfalls eines externen Relais und einer Gewichtsersparnis. Außerdem wird durch den Wegfall von mechanischen Bauteilen wie z.B. dem Temperaturschalter 37 und dem Schaltrelais 15 und der geringeren Anzahl von Verknüpfungspunkten die Betriebssicherheit erhöht und die Lebensdauer verlängert.

## Patentansprüche

1. Kraftstoffilter, insbesondere für Diesel-Verbrennungskraftmaschinen, bei dem im Filterkopf eingebaut sind:
a) ein Heizelement (5),
b) ein Schaltglied (50) als Teil eines
c) Logik- und Leistungsbausteins (52), enthaltend
d) einen Temperaturfühler,
e) einen temperaturabhängigen und daran angeschlossenen Schalter (58)
und bei dem das Heizelement (50) durch den Logik- und Leistungsbausteins (52) an Batteriespannung anschaltbar ist, dadurch gekennzeichnet, daß der Logik- und Leistungsbaustein (52) zur Auswertung des Steuersignals "Zündung ein" über eine zweite Eingangsklemme (62) ein Eingangssignal erhält, das sich von dem bei ausgeschalteter Zündung unterscheidet und daß der Logik- und Leistungsbaustein eine integrierte Batteriespannungsüberwachungsschaltung enthält, die eine durch einen Anlaßvorgang bedingte hohe Batteriebelastung erkennt und für diesen Zeitraum ein Ausschalten des Heizelements (5) veranlaßt.

2. Kraftstoffilter nach Anspruch 1, dadurch gekennzeichnet, daß der Logik- und Leistungsbaustein (52) eine Ansteuerlogik und Schutzbeschaltung (56) enthält, die die Funktionsweise des Bausteins überwacht und bei nichtbetriebskonformen Zuständen das Heizelement (5) abschaltet.

3. Kraftstoffilter nach Anspruch 1 oder 2, dadurch gekennzeichnet, daß der Logik- und Leistungsbaustein über einen Regelalgorithmus mit mehreren Leistungsstufen die durch das Heizelement abgegebene Heizleistung steuert.

4. Kraftstoffilter nach einem der Ansprüche 1 bis 3, dadurch gekennzeichnet, daß der Logik- und Leistungsbaustein (52) durch eine Hybridschaltung oder integrierte Schaltung realisiert ist.

## Claims

1. A fuel filter, especially for Diesel engines, comprising
a) a heating element (5),
b) a switching element (50) as part of a
c) logic and power module (52), containing
d) a temperature sensor, and
e) a temperature-dependent switch (58) connected thereto which are all incorporated within the filter head,
wherein the heating element (50) is connectable to battery voltage via the logic and power module (52), characterised in that, to evaluate the control signal "ignition on", the logic and power module (52) receives an input signal via a second input terminal (62) which is different from that received when the ignition is switched off, and that the logic and power module contains an integrated battery voltage monitoring circuit which recognises a high battery load consequent upon engine ignition and causes the heating element (5) to be switched off for this period.

2. A fuel filter according to claim 1, characterised in that the logic and power module (52) contains a control logic and suppressor circuit (56) which monitors the function of the module and switches off the heating element (5) in the event of deviation from standard operating conditions.

3. A fuel filter according to either claim 1 or 2, characterised in that the logic and power module controls the heat output of the heating element via a control algorithm with several power stages.

4. A fuel filter according to any one of claims 1 to 3, characterised in that the logic and power module (52) comprises a hybrid circuit or integrated circuit.

## Revendications

1. Filtre à carburant, en particulier pour des moteurs à combustion interne-diesel, dans lequel sont insérés dans la tête de filtre :
a) un élément chauffant (5),
b) un élément de commutation (50) comme partie d'un
c) élément logique et élément de puissance (52), contenant
d) un capteur de température,
e) un commutateur (58) raccordé à ce dernier et dépendant de la température,
et dans lequel l'élément chauffant (50) peut être branché sur la tension de batterie par l'élément logique et l'élément de puissance (52), caractérisé en ce que l'élément logique et l'élément de puissance (52) pour l'exploitation du signal de commande "allumage enclenché" obtient par une deuxième borne d'entrée (62) un signal d'entrée, qui se distingue de celui correspondant à l'allumage déconnecté et en ce que l'élément logique et de puissance contient un circuit intégré de contrôle de tension de la batterie, qui détecte une charge de batterie élevée due à l'opération de démarrage et provoque pendant cet intervalle de temps un débranchement de l'élément chauffant (5).

2. Filtre de carburant selon la revendication 1, caractérisé en ce que l'élément logique et élément de puissance (52) contient une logique d'excitation et un circuit de protection (56), qui contrôle le fonctionnement de l'élément et déconnecte l'élément chauffant (5) en cas d'états de marche non conformés.

3. Filtre de carburant selon la revendication 1 ou 2, caractérisé en ce que l'élément logique et élément de puissance commande par un algorithme de réglage à plusieurs étages de puissance, la puissance de chauffage cédée par l'élément de chauffage.

4. Filtre de carburant selon une des revendications 1 à, 3, caractérisé en ce que l'élément logique et élément de puissance (52) est réalisé par un circuit hybride ou un circuit intégré.
